# EUROPEAN PATENT SPECIFICATION

(11) **EP 3 975 727 B1**
(45) Date of publication and mention of the grant of the patent: **23.09.2026**
(21) Application number: 20727330.1
(22) Date of filing: 27.05.2020
(51) Int. Cl.: A23C 9/13, A23C 21/06, A23C 9/123

(54) **YOGHURT BASE COMPOSITION COMPRISING WHEY PROTEIN PARTICLES**
JOGHURTBASISZUSAMMENSETZUNG ENTHALTEND MOLKENPROTEINPARTIKELN
COMPOSITION DE BASE POUR YAOURT COMPRENANT DES PARTICULES DE PROTEINES DE LACTOSÉRUM

(30) Priority: 27.05.2019 EP 19176716
(43) Date of publication of application: 06.04.2022
(73) Proprietor: Arla Foods amba, 8260 Viby J (DK)
(72) Inventor: SIEUWERTS, Sander, 8660 Skanderborg (DK); YAZDI, Saeed, Rahimi, 8320 Mårslet (DK)
(74) Representative: Plougmann Vingtoft a/s
(86) International application number: PCT/EP2020/064684
(87) International publication number: WO 2020/239826

(56) References cited:
- US-A- 4 446 164
- US-A1- 2006 134 297
- US-A1- 2007 202 235
- US-A1- 2009 074 932
- US-A1- 2017 318 828
- THIEN TRUNG LE ET AL: "Physical properties and microstructure of yoghurt enriched with milk fat globule membrane material", INTERNATIONAL DAIRY JOURNAL, ELSEVIER APPLIED SCIENCE, BARKING, GB, vol. 21, no. 10, 22 April 2011 (2011-04-22), pages 798 - 805, XP028240789, ISSN: 0958-6946, [retrieved on 20110519], DOI: 10.1016/J.IDAIRYJ.2011.04.015

## Description

### Technical field

The provided invention relates to a yoghurt base composition comprising butter milk and a small-size-particle Whey Protein Concentrate (WPC)-fraction, and a method of producing yoghurt products comprising butter milk and a small-size-particle WPC-fraction.

### Background

The production of dairy products involves a number of side-streams or by-products that do not at first seem to have any immediate commercial value. These side-streams are often not used in dairy products or ingredients made from dairy, and only a small fraction sometimes finds its way into finished products. The side-streams are often considered and treated as waste, sold as low value ingredients to the animal feed industry or combusted in biogas plants, even though some have good nutritional properties. Examples of side-streams include sweet butter milk (originating from butter production) and a small-size-particle WPC-fraction originating from production of different whey protein concentrates.

In order to make better use of these side-streams, the present invention uses butter milk and a small-size-particle WPC-fraction for preparation of a yoghurt base composition. This composition can be used for production of yoghurt thereby providing affordable nutrition to consumers.

The preparation of dairy products using an intermediate dairy mixture comprising protein powder such as whey protein concentrate or whey protein isolate and optionally further dairy ingredients such as buttermilk, is disclosed in US 2007/202235 A1.

US 2017/318828 A1 discloses the preparation of high-protein, whey protein-based yoghurts, using a combination of insoluble whey protein particles having a particle size of 1 to 10 micron and acid-gellable whey protein aggregates having a particle size of 0.02 to 0.5 micron, and optionally, other ingredients.

### Summary of the invention

The current invention, which is defined by the claims, provides methods and yoghurt base compositions and products based on butter milk and a small-size-particle WPC-fraction, two side-streams from the dairy industry.

Butter milk is preferably sweet butter milk, which is obtained as a side-stream of butter production as either liquid sweet butter milk or as sweet butter milk powder (the dried version of sweet butter milk). The whey protein used in the present methods, compositions and products, are preferably a small-size-particle WPC-fraction obtained as a side-stream from the production of whey protein concentrates.

In one aspect, a method is provided for producing a yoghurt base composition, said method comprising combining butter milk and a small-size-particle WPC-fraction. According to the present invention, said small-size-particle WPC-fraction has an average size in the range of 15-60 nanometer.

In one embodiment, the yoghurt base composition is a powder base composition.

Thus, in a preferred embodiment, the provided method comprises combining powdered butter milk and a cowdered small-size-particle WPC-fraction. According to the present invention, said small-size-particle WPC-fraction has an average size in the range of 15-60 nanometer.

In another embodiment, however, the yoghurt base composition is a liquid base composition. Thus, in a preferred embodiment, the provided method comprises combining butter milk and the as defined above small-size-particle WPC-fraction, wherein the butter milk is liquid butter milk.

In a second aspect, a method is provided for producing a liquid yoghurt product or a liquid yoghurt-like product, said method comprising mixing said yoghurt base composition as defined in the first aspect above with a liquid, such as water, milk, butter milk, milk permeate, juice, milk and/or juice concentrates.

A third aspect relates to a yoghurt base composition obtainable by the method defined by the first aspect, above.

A fourth aspect relates to a yoghurt base composition comprising butter milk and the above-defined small-size-particle WPC-fraction.

The butter milk and small-size-particle WPC-fraction are preferably mixed in such a ratio that, upon mixing and addition of liquid, such as water, the contents of fat, protein and preferably also micronutrients resemble that of skim milk.

The invention has multiple advantages. Firstly, the butter milk side-stream from butter production in liquid or powder form, and the side-stream of small-size-particle WPC-fraction are low-cost ingredients, less expensive than skim milk powder, whole milk powder and conventional whey protein concentrate or isolate, which are the near alternatives for making a blend with a similar composition. The methods and products provided herein, thus, provide a way to valorize side-streams that are currently considered waste or sold at very low price as animal feed. The methods and products, thereby, increase both the financial gain and the sustainability (CO₂ footprint) per litre of milk. Secondly, the mixtures of butter milk and small-size-particle WPC-fractions can be provided as powders for a powder base composition. This allows a compact powder base composition to be transferred over longer distances at much lower costs than transporting a finished liquid product. The powder base has higher physical and chemical stability than a liquid product, thus also allowing transport for >3 months to distant locations. Furthermore, the powder base composition can be kept at ambient conditions and does not require cooled storage, which both saves costs and allows easier transport. Finally, the amount of material to be shipped in powder form only makes up 10-20% of the volume of the finished liquid yoghurt product. These parameters provide cost savings and add to the sustainability of yoghurt and yoghurt-like products. An additional advantage of a powder base composition is that the consumer can always have a fresh product, irrespective of availability of a cool chain.

### Description of Drawings

Figure 1.
   General overview of the ingredients and the process for making a powder base composition (blend) using butter milk powder and a small-size-particle WPC-fraction and the following liquid yoghurt or yoghurt-like product.
Figure 2.
   General overview of the ingredients and the process for making a liquid base composition (blend) using liquid butter milk and a small-size-particle WPC-fraction and the following liquid yoghurt or yoghurt-like product.
**Figure** 3.
   Part A: Nutritional composition of the main individual ingredients (g/100g). Part B: Nutritional composition of a standard sweetened yoghurt base and thirteen examples of yoghurt bases containing sweet butter milk (powder) and a small-size-particle WPC-fraction (g/100g). SMP: skim milk powder. SBM: sweet butter milk. SBMP: sweet butter milk powder. WPC: whey protein concentrate. GOS: galactooligosaccharides.
Figure 4.
   Typical acidification curve for fermentations at 42 °C using one of the blends (solid line) and skim milk (dashed line) as described in Example 1.
Figure 5.
   Typical particle size distribution of a small-size-particle WPC-fraction (solid line) and ordinary WPC powder (dashed line) in percentage of total size of all particles (number of particles multiplied by their sizes) with the particle size in arbitrary units on the x-axis.
**Figure 6****.**
   A **simplified** overview of the spray drying chamber, the inlet of whey protein concentrate in a liquid state, and the outlet of whey protein concentrate in a solid state (out at the bottom) and the small-size-particle WPC-fraction (out at the top).The arrow designated "Hot air" is illustrating the flow of hot air into the spray drying chamber used to dry the liquid whey protein concentrate.

### Detailed description

The provided invention concerns methods for production of yoghurt base compositions and yoghurt products comprising butter milk and a small-size-particle WPC-fraction, for which the butter milk is in solid or liquid form. Yoghurt base compositions and yoghurt products obtained by such methods are also provided herein as well as yoghurt base compositions and yoghurts products, which comprise butter milk and a small-size-particle WPC-fraction. According to the present invention, said small-size-particle WPC-fraction has an average size in the range of 15-60 nanometer.

The powder base composition can be transported to a target location, e.g. a dairy plant and/or to the end user. At the target location, it is possible to mix in additional ingredients in powder or liquid form. Upon reconstitution of the powders in a liquid, it is possible to blend in liquid ingredients, such as frozen starter culture. Subsequently, fermentation and further processing take place following standard (industrial) practice for yoghurt production. Addition of other ingredients than butter milk powder and a small-size-particle WPC-fraction is also possible.

### Yoghurt

Both the yoghurt products and methods for producing said yoghurt products are provided herein. The yoghurt is obtained by basically mixing butter milk with a small-size-particle WPC-fraction. In one embodiment, a powder base composition can be prepared, which is later mixed with liquid and other optional ingredients. Yoghurt culture can be added at any preferred step. According to the present invention, said small-size-particle WPC-fraction has an average size in the range of 15-60 nanometer.

Yoghurt is a food product, which is generally produced by bacterial fermentation of milk. The bacteria used to make yoghurt are known as yoghurt cultures, herein also starter cultures. Fermentation of lactose by these bacteria produces lactic acid, which acts on milk protein to give the yoghurt its texture and characteristic tart flavour. Yoghurt may be produced from any milk or milk derivative from any mammal, such as raw milk, pasteurized milk, butter milk, sweet butter milk, solidified milk, milk concentrate and milk permeate.

Milk could in principle be obtained from any lactating animal, such as cattle, goats, sheep, buffalo, yaks, lamas, camels, donkeys, horses or reindeer. However, most preferred, the milk used in the context of the present disclosure is obtained from cattle, goats, sheep or buffalo, most preferably, the milk is bovine milk.

Several ingredients can be added to the yoghurt during the different production steps. These include ingredients which e.g. can change the yoghurt's texture, flavour, colour and/or nutritional features. Thus, from a standard yoghurt base composition, several different products can be produced. These products may be liquid yoghurts or traditional spoonable yoghurts.

### Butter milk

One of the basic ingredients of the yoghurt base compositions provided herein is liquid butter milk, and/or butter milk powder. Butter milk can be obtained from several types of milk such as cow, water buffalo, goats, ewes, mares, camels, and/or yaks milk. As mentioned, bovine milk is preferred.

The butter milk of the present invention can be any type of butter milk, such as sweet butter milk, acid butter milk or cultured butter milk. Sweet butter milk is a by-product from churning sweet cream into butter. Acid (acidified) butter milk is made by adding a food-grade acid (such as lemon juice) to milk. Cultured butter milk is made by pasteurizing and homogenizing milk (with 1% or 2% fat) before inoculating it with a culture of *Lactococcus lactis* plus *Leuconostoc citrovorum* to simulate the naturally occurring bacteria in the old-fashioned product.

The liquid butter milk can be dried and provided in solid form as a butter milk powder. The powder may be loose and/or compact powders as well as grains.

The methods and compositions provided herein generally employs butter milk in either liquid or powder form. Specifically, in the method for producing a yoghurt base composition, where butter milk is combined with the above-defined small-size-particle WPC-fraction, the butter milk can be in either liquid or solid form. In certain embodiments, the yoghurt base composition is a dry composition (powder base composition), intended for later reconstitution, and in these cases, butter milk powder is preferably used. However, the butter milk may also be dried after being combined with the small-size-particle WPC-fraction.

### Small-size-particle WPC-fraction

Generally, whey protein originates from the liquid remaining after milk has been curdled and strained. This remaining liquid is generally called whey; the liquid contains whey proteins but also lactose and minerals. By means of different filtration processes, such as microfiltration, ultrafiltration and/or nanofiltration, the whey protein can be separated from most of the lactose and minerals. The resulting whey protein composition can be concentrated to a whey protein concentrate liquid, which then can be dried e.g. in a spray drier to obtain a dry whey protein concentrate (WPC).

The fraction of the whey protein concentrate utilized in the present invention is named either small-size-particle WPC-fraction or Whey Protein Concentrate (WPC)-particle fraction. Both names refers to the same fraction of the WPC. According to the present invention, said small-size-particle WPC-fraction has an average size in the range of 15-60 nanometer.

Whey protein compositions are well-known by-products of different processes in the dairy industry. For example, whey can be a by-product of the manufacture of cheese or casein(s). The small-size-particle WPC-fraction used in the presently provided methods, base compositions and products can derive from any source of the dairy value chain. In a preferred embodiment, the small-size-particle WPC-fraction is derived from a side-stream of a cheese production process.

In cheese production, milk is cultured at an optimal temperature for growth of bacteria that feed on lactose and thus ferment the lactose into lactic acid. Once a sufficient amount of lactic acid has been developed, rennet is added to cause the casein in the milk composition to coagulate. Rennet contains the enzyme chymosin, which converts κ-casein to para-κ-caseinate, which stays in the cheese curd, and glycomacropeptide, which remains in the cheese whey side-stream. The cheese whey side-stream also contains large amounts of whey protein. As the curd is formed, milk fat is trapped in a casein matrix. After adding the rennet, the cheese milk is left to form curds over a period of time, before the curd is drained/dehydrated. Thus, the preferred small-size-particle WPC-fraction used in the methods and base compositions provided herein is obtained from whey obtained as a side-stream from cheese production, where whey is separated from the cheese curd after initial culturing followed by coagulation using cheese rennet. The small-size-particle WPC-fraction is obtained as part of a whey protein composition from the liquid, which is drained from the cheese curd.

Whey protein is a mixture of globular proteins isolated from the liquid whey. The protein fraction in whey constitutes approximately 10% of the total dry solids in whey. The protein is typically a mixture of about 65% beta-lactoglobulin, 25% alpha-lactalbumin, 8% bovine serum albumin and immunoglobulins. The term "whey protein" thus includes alpha-lactalbumin, beta-lactoglobulin, bovine serum albumin and immunoglobulins.

The whey protein composition can be isolated to a whey protein concentrate liquid.

This whey protein concentrate liquid can be subjected to a step of spray drying to obtain whey protein concentrate in a solid form.

The small-size-particle WPC-fraction is typically obtained during the spray drying step of the whey protein concentrate (WPC) liquid.

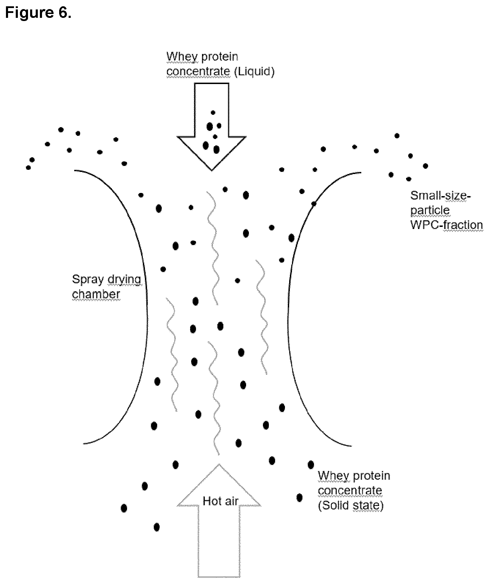

During spray-drying, heated air is blown into the spray drier chamber, which the whey protein concentrate (WPC) liquid is sent through. Most of the concentrate particles will fall through the tunnel and emerge as a dry whey protein concentrate. However, some of the particles are too light or have too large a surface to pass the hot air stream and will therefore exit the chamber from the top, where it is captured in a filter. The particles captured by the filter is designated the "small-size-particle WPC-fraction" (Fig. 6). The small-size-particle WPC-fraction is obtained as solid state compositions, such as a powder, due to the process used for their isolation by drying to obtain the desired fraction.

The amount of protein in a WPC fraction, and thereby its purity, is designated by the number following the WPC abbreviation. Thus, a WPC fraction containing 80% protein by weight is designated WPC80, and a WPC fraction containing 60% protein by weight is designated WPC60.

In the methods, yoghurt base compositions and yoghurt products provided herein, the small-size-particle WPC-fraction is in a preferred embodiment a small-size-particle WPC-fraction having a purity of at least 50 %, such as at least 60 %, such as at least 65 %, such as at least 70 %, such as at least 75 %, such as at least 80 %, such as at least 85 %, such as at least 88 %, such as at least 89 % protein by weight. In a preferred embodiment, the small-size-particle WPC-fraction has a purity of at least 60%. In another preferred embodiment, the small-size-particle WPC-fraction has a purity of at least 80%.

Specifically, the small-size-particle WPC-fraction is obtained as a side-stream from the production of whey protein concentrate.

The size of the protein particles can measured by the method dynamic light scattering (DLS). This is a universally used method for measuring small particles, based on backscattering of light in a particle suspension or solution. It analyses how much the backscatter intensities fluctuate (usually by means of a function, called the autocorrelation function). Suspension or solutions with small particles show more intensity fluctuation compared to those containing bigger particles. Using this method, you commonly obtain a volume-based size distribution.

For measurement of the particle size, a NANO-flex apparatus is utilized. The "Nanotrac" analyser of the Microtrac FLEX software is used to obtain the particle sizes using the following settings:

**Table 1: The settings utilized for in the Microtrac FLEX software. For this NANO-flex apparatus, it is not possible to change the laser power.**

| TIMING OPTIONS | | WHEY PROTEIN | | WATER | |
|---|---|---|---|---|---|
| Set-zero time | 30 s | Refractive index | 1.53 | Refractive index | 1.33 |
| Run time | 30 s | Transparency | Transparent | High temperature | 30°C |
| No. of runs | 3 | Shape | Irregular | High temperature viscosity | 0.797 |
| Delay time | 0 s | | | Low temperature | 20°C |
| | | | | Low temperature viscosity | 1.002 |

After initial setup of the system, the measuring probe is placed in demineralized water to obtain a background reading. Subsequently, the actual samples are run and the particle size results are obtained.

In one DLS analysis, the following particle sizes (in nanometer, nm) were obtained:

**Table 2: Particle sizes (in nanometer) obtained from one batch of WPC80 during the drying step. The amount of protein in a WPC fraction is designated by the number following a WPC abbreviation. Thus, a WPC fraction containing 80% protein by weight is designated WPC80, and a WPC fraction containing 60% protein by weight is designated WPC60.**

| | Minimum | Average | Maximum |
|---|---|---|---|
| WPC80 | 85,9 | 615,64 | 6540 |
| Small-size-particle WPC80 fraction | 12,77 | 32,28 | 5500 |

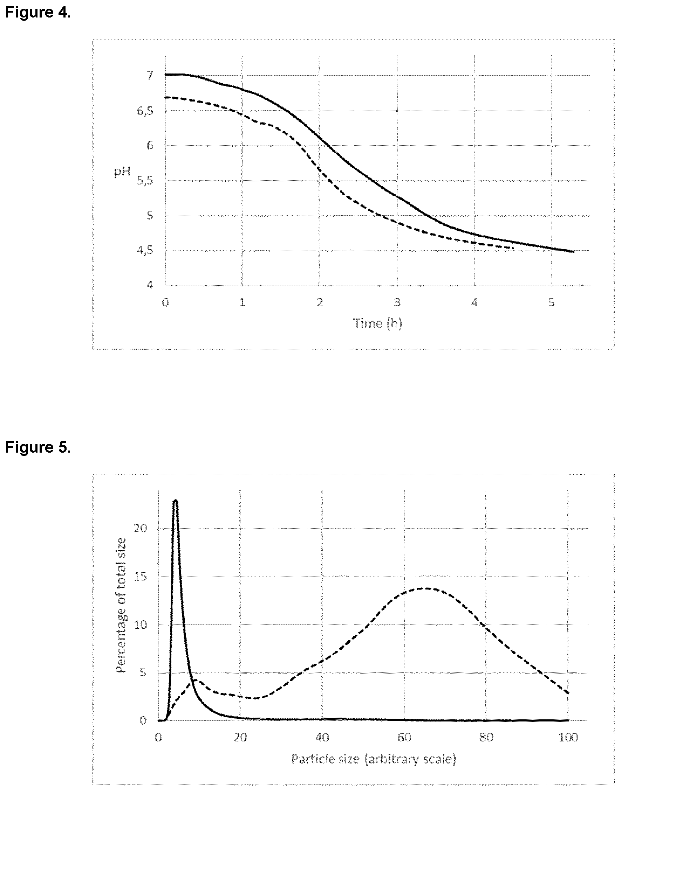

A typical particle size distribution of a small-size-particle WPC-fraction and ordinary WPC powder in percentage of total size of all particles (number of particles multiplied by their sizes) is depicted in figure 5.

The mean particle size of the particles is calculated as the volume mean, meaning the diameter for a particle which has the average size calculated according to the volume.

As can be seen from Figure 5 and Table 2, the small-size-particle WPC-fraction differs substantial from other commercial WPC particles such as WPC80 fraction in terms of particle size and particle size distribution. The particle size distribution for the small-size-particle WPC-fraction is very narrow compared to the size distribution for WPC80.

The small-size-particle WPC-fraction may have a size in the range of 0-85 nanometer, such as 12.5-80, such as 12.5-75 nanometer, such as 12.5-70 nanometer, such as 12.5-65 nanometer, such as 12.5-60 nanometer, such as 12.5-55 nanometer, such as 12.5-50 nanometer. By this is meant that at least 90% of the particles, such as at least 95% of the particles lie within this range.

According to the present invention, the small-size-particle WPC-fraction has an average size in the range of 15-60 nanometer, such as 20-50, such as 25-40 nanometer. This is significantly below the average particle size for commercially available whey protein powder particles.

In one embodiment, at least 90% of the small-size-particle WPC-fraction particles have a size smaller than 80 nanometer, such as at least such as at least 95%, such as at least 97%, such as at least 99%. This is confirmed by data shown in Figure 5. The small-size-particle WPC-fraction may comprise larger particles but these will be present in very low numbers.

Preferably, the particle size and size distribution is measured using dynamic light scattering.

### Method of producing a yoghurt base composition

A main aspect of the present disclosure relates to a method of producing a yoghurt base composition, wherein butter milk is combined with a small-size-particle WPC-fraction. In one embodiment, the method comprises combining butter milk and a small-size-particle WPC-fraction.

In principle, the yoghurt base composition can be either liquid or solid/powder.

Generally, the method comprises
a. obtaining or providing the above-defined small-size-particle WPC-fraction,
b. obtaining or providing butter milk, and
c. mixing said small-size-particle WPC-fraction and butter milk.

In one embodiment, the method comprises the following steps:
a. obtaining or providing a whey protein concentrate liquid,
b. separating and isolating the above-defined small-size-particle WPC-fraction from said whey protein concentrate liquid, thereby obtaining a small-size-particle WPC-fraction,
c. providing a butter milk, and
d. mixing said small-size-particle WPC-fraction with said butter milk.

Importantly, the yoghurt base composition can be either liquid or powder and in one preferred embodiment, the yoghurt base composition is a powder base composition.

Accordingly, the small-size-particle WPC-fraction is in one embodiment in solid form, such as a powder.

In one embodiment, the yoghurt base composition is a liquid base composition. The liquid base composition may be obtained by mixing the above-defined small-size-particle WPC-fraction with liquid butter milk.

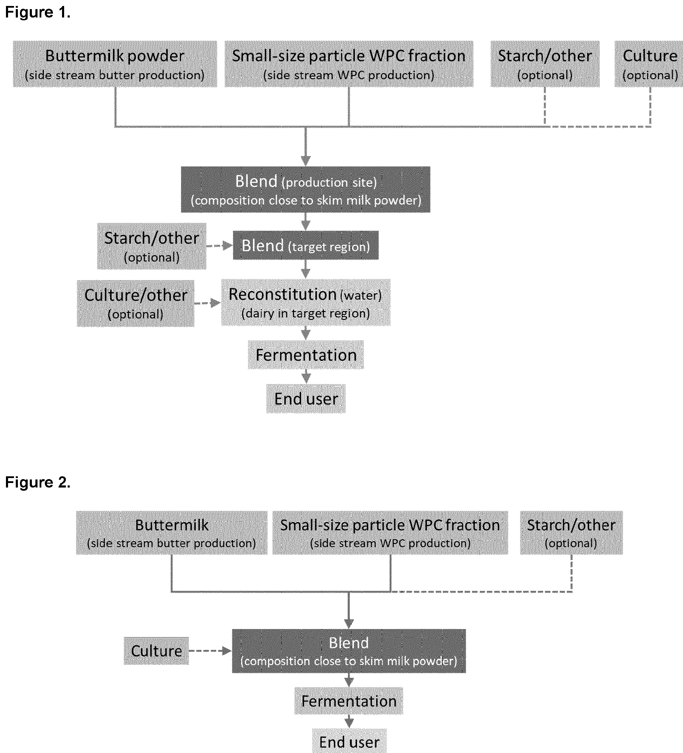

In one preferred embodiment, the liquid base composition is obtained by dissolving the small-size-particle WPC-fraction in a liquid butter milk by actively mixing the powder and the butter milk (Figure 2).

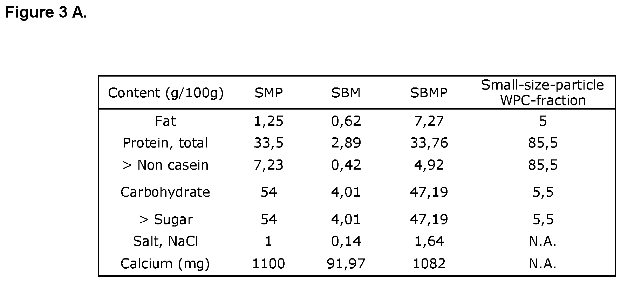

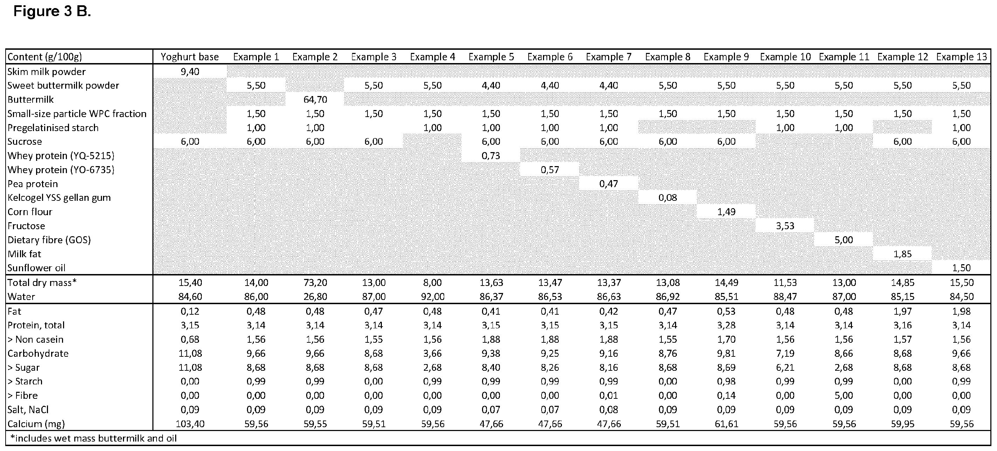

The butter milk and small-size-particle WPC-fraction can be combined in any suitable ratio, which produces a yoghurt base composition and a reconstituted liquid yoghurt or yoghurt-like product with appropriate characteristics, e.g. in terms of macronutrients, micronutrients, taste and texture. In a preferred embodiment, the yoghurt base composition is adapted to resemble skim milk powder in terms of content of fat, protein and micronutrients (Figure 3).

Finally, the method of producing a yoghurt base composition may further comprise adding one or more additional components. Additional components may serve to optimize the taste, flavour, texture and/or health effects of the final yoghurt product and/or to formulate a yoghurt base composition which resembles (semi-)skim milk even closer.

An additional component could be a sweetening agent, starch, protein, lipid, emulsifier, stabiliser, hydrocolloid, flavour, flavour enhancer, colour, starter culture, fibre, vitamin and/or mineral to said yoghurt base composition. A freeze-dried starter culture may also be added as an additional component of the yoghurt base powder composition.

Examples of additional components are provided herein below.

### Method of producing a liquid yoghurt or yoghurt-like product

As mentioned, the yoghurt base composition described herein above may be either a liquid or a solid composition, such as a powder. Whether the yoghurt base composition is liquid or solid, the base composition may be reconstituted into a yoghurt or yoghurt-like product by mixing it with a liquid. One aspect of the invention, thus, relates to a method of producing a liquid yoghurt or yoghurt-like product, said method comprising mixing a yoghurt base composition as defined herein above with a liquid.

For the present invention, the yoghurt-like product is defined as a product that has characteristics and functional properties similar to that of yoghurt.

The choice of liquid would depend on the properties that are desired for the final yoghurt or yoghurt-like product. Examples of relevant and suitable liquids are water, milk, butter milk, milk permeate, juice, milk and/or juice concentrates.

In other embodiments, the liquid is selected from the group consisting of water, carbonated water, flavored water, carbonated flavored water, juice (juice derived from any fruit or any combination of fruits, juice derived from any vegetable or any combination of vegetables or nectar), drinks containing juice, coffee, decaffeinated coffee, tea, tea from fruit products, tea derived from herb products and/or decaffeinated tea, milk obtained from any animal, milk-derived products such as sweet butter milk, milk alternative products derived from soy, rice, coconut and/or other plant material, fermented milk products, milk permeate and/or drinking chocolates.

In one embodiment, the liquid is selected from the group consisting of water, carbonated water, flavored water, carbonated flavored water.

In another embodiment, the liquid is selected from the group consisting of milk obtained from any animal, milk-derived products such as butter milk, liquid extract products derived from soy, rice, coconut or other plant material, fermented milk products and drinking chocolates.

In one embodiment, the liquid is selected from the group consisting of juice (juice derived from any fruit or any combination of fruits, juice derived from any vegetable or any combination of vegetables or nectar) and/or drinks containing juice.

In another embodiment, the liquid is selected from the group consisting of coffee, decaffeinated coffee, tea, tea from fruit products, tea derived from herb products and/or decaffeinated tea.

It is preferred, however, to mix the yoghurt base composition with water or milk.

One challenge with making liquid yoghurt product based on a powder base composition is that the final product may become 'slimy' without post-fermentation treatment such as high-speed blending or homogenisation. In one embodiment, the mixture of the powder base composition and liquid is subjected to high-speed blending and/or homogenisation. It is preferred that the small-size-particle WPC-fraction in said yoghurt base composition is dissolved, not only suspended, in the liquid added to the composition to obtain the yoghurt or yoghurt-like product by homogenisation.

Another solution is addition of stabilisers and/or emulsifiers, such as pectins, gellan gum or exopolysaccharide-producing microbial cultures such as Yo-mix 401.

Fermentation starter culture may be added either to the yoghurt base composition or in the method of producing the liquid yoghurt or yoghurt-like product. Where starter culture is added to the yoghurt base composition, the culture is preferentially a lyophilized culture, in particular, where the base composition is a powder composition.

In a preferred embodiment, a yoghurt fermentation starter culture containing *Streptococcus thermophilus* and/or *Lactobacillus delbrueckii* subsp. *bulgaricus* is added to either the yoghurt base composition and/or during production of the liquid yoghurt or yoghurt-like product.

In another embodiment, the yoghurt fermentation starter culture contains *Streptococcus thermophilus* and *Lactobacillus delbrueckii* subsp. *bulgaricus* and an adjunct culture from the genera *Lactobacillus, Streptococcus, Leuconostoc, Lactococcus* or *Bifidobacterium.* Starter cultures may also comprise *Streptococcus thermophilus, lactobacillus delbrueckii* subsp. *bulgaricus, Lactobacillus, Streptococcus, Leuconostoc, Lactococcus* or *Bifidobacterium.*

The method of producing a liquid yoghurt or yoghurt-like product should preferably comprise a fermentation step, where the yoghurt starter culture can ferment the composition of butter milk and small-size-particle WPC-fraction. In one preferred embodiment, the liquid yoghurt or yoghurt-like product can be fermented by subjecting the composition to any temperature between 30-45 °C for a sufficient amount of time.

The fermentation can be monitored by measuring the pH and can be continued until the mixture reaches a pH level between 3-6, such as between 3.5-5.5, such as between 4-5, such as 4.2-4.7, such as around 4.55. Once the desired pH is reached, the fermentation is terminated. Fermentation can be terminated by cooling the liquid yoghurt composition to a temperature between freezing and 30°C, preferably to such as 2-20°C, such as 2-15°C, such as 2-10°C, such as 2-6°C, such as 2-5°C, such as 2-4°C.

The method of producing a liquid yoghurt or yoghurt-like product may also include adding one or more additional components. Additional components may serve to optimize the taste, flavour, texture and/or health effects of the final yoghurt composition.

An additional component could be a sweetening agent, starch, protein, lipid, emulsifier, stabiliser, hydrocolloid, flavour, flavour enhancer, colour, starter culture, fibre, vitamins and/or mineral to said yoghurt base composition. A freeze dried starter culture may also be added as an additional component to the yoghurt base powder composition.

Examples of additional components are provided herein below.

It is pointed out that only examples where the whey protein concentrate particle fraction has an average size in the range of 15-60 nanometer fall within the scope of the invention as defined by the claims.

### Yoghurt base composition

A main aspect of the present invention relates to a yoghurt base composition obtainable by the methods defined herein above. A yoghurt base composition is also provided, which comprises butter milk and a small-size-particle WPC-fraction. The provided yoghurt base composition may be in either a liquid or solid form.

In one embodiment the liquid form of the yoghurt base composition, the base composition has a pH above 5, such as above 6, for example above 7 or higher, such that the WPC particles do not form a gel.

The butter milk and small-size-particle WPC-fraction is combined in any suitable ratio, which produces a yoghurt base composition or a reconstituted liquid yoghurt or yoghurt-like product with appropriate and desired characteristics, e.g. in terms of macronutrients, micronutrients, taste and texture. In a preferred embodiment, the yoghurt base composition is adapted to resemble skim milk powder in terms of content of lactose, protein (mainly casein and whey) and micronutrients, as defined elsewhere herein (Fig 3A).

### Liquid yoghurt or yoghurt-like product

Another aspect of the present invention relates to a liquid yoghurt product obtainable by the methods defined herein above. A liquid yoghurt product is also provided, which comprises butter milk and a small-size-particle WPC-fraction. The nature and details of the butter milk and small-size-particle WPC-fraction are defined elsewhere herein above.

The liquid yoghurt or yoghurt-like product may also comprise one or more minerals, such as calcium, iron, magnesium, phosphor, potassium, zinc, copper and/or selenium.

Moreover, the liquid yoghurt or yoghurt-like product may comprise one or more additional components. Additional components may serve to optimize the taste, flavour, texture and/or health effects of the final yoghurt composition.

An additional component could be a sweetening agent, starch, protein, lipid, emulsifier, stabiliser, hydrocolloid, flavour, flavour enhancer, colour, starter culture, fibre, vitamin and/or mineral to said yoghurt base composition. A freeze drier starter culture may also be added as an additional component of the powder base composition.

Examples of additional components are provided herein below.

### Lipids, proteins and carbohydrates

The yoghurt base composition and the liquid yoghurt or yoghurt-like product provided herein comprise proteins, lipids and/or carbohydrates.

In a specific embodiment, the casein protein is the casein ingredient Miprodan-40.

In a specific embodiment, the protein can be a plant-based protein such as pea protein, hemp protein, lentil protein, lupin protein, soy protein, cereal protein and/or potato protein.

In one embodiment, the lipids may be in the form of dairy fat such as butter derived from milk of any mammal.

In another embodiment, the lipids may be vegetable fat, such as sunflower oil, rape seed oil, palm oil, olive oil or coconut fat.

If the sweetness level of a yoghurt produced using sucrose should be obtained while using less sugar, it is possible to use other sugars that are sweeter than sucrose, such as fructose, or sugars and sugar alcohols that have low glycemic index, such as xylitol and mannitol.

Starch can be obtained from several sources, and in one preferred embodiment, the compositions provided herein comprise starch obtained from potatoes, whole grains, wheat (white flour), maize (corn, corn flour), rice (rice flour), and/or cassava. In a preferred embodiment, the starch is refined starch and/or modified starch. The starch may in one preferred embodiment be provided as a powder. In yet another embodiment, the starch is native starch. Native starch is unmodified starch, which has not been pre-gelatinized by heat or treated with chemicals or acid/alkali to change its properties. The native starch can comprise potato starch and/or corn starch.

In one embodiment, the starch can be substituted with gellan gum such as Kelcogel YSS (high acyl) or Kelcogel ADY (low acyl).

The yoghurt base compositions have a ratio of lipid, protein, and carbohydrate, which allows production of a liquid yoghurt product by reconstituting the base composition, e.g. by addition of a liquid, which resembles that of milk, such as skim milk. The ratio of lipid, protein, and carbohydrate in the base composition is preferably in the range of 1:1:1, 1:1:25, 1:2:4, 1:2:5, 1:7:8, 1:7:15, 1:7:18, 1:7:20, 1:7:22, 1:8:23, 1:10:1, 1:10:25.

The yoghurt base compositions preferably comprise lipid in the range of 0-25%, such as 0-15%, such as 3-13%, such as 3.4-4%.

The protein content of the base compositions preferably ranges within 1-50%, such as 10-40%, such as 20-26%, such as 22-24%.

The carbohydrate content of the base compositions preferably ranges within 40-80%, such as 45-68%, such as 62-66%.

The yoghurt base compositions provided herein, in a preferred embodiment, comprises approximately 3.40% lipid, 22.44% protein and 69.02% carbohydrate.

In one embodiment, the liquid yoghurt or yoghurt-like product has a lipid content in the range of 0-10%, such as 0-5%, such as 0-1%, such as 0.1-1%.

In one embodiment, the liquid yoghurt or yoghurt-like product has a protein content in the range of 1-20%, such as 1-15%, such as 1-10%, such as 1-5%, such as 3-5%, such as 3-4%.

In one embodiment, the liquid yoghurt or yoghurt-like product has a carbohydrate content in the range of 1-20%, such as 5-15%, such as 8-12%.

The liquid yoghurt or yoghurt-like product provided herein, in a preferred embodiment, comprises approximately 0.47% lipid, 3.14% protein and 9.66% carbohydrate.

### Additional ingredients

The yoghurt base compositions and the liquid yoghurt or yoghurt-like product provided herein can also comprise one or more additional optional components. The ingredients can be added to the yoghurt during the different production steps and can e.g. be used to change the yoghurt's texture, flavour, colour and/or nutritional features. These ingredients can e.g. comprise fibers, fruit, flavours, colours, colloids, stabilizers, vitamins, emulsifiers and/or minerals.

In certain embodiments of the methods and compositions provided herein, the additional components are sweetening agents, starch, protein, lipids, emulsifiers, stabilisers, hydrocolloids, flavours, flavour enhancers, colours, starter cultures, fibres, vitamins and/or minerals.

The yoghurt can have both a short and long texture. A long texture is the same as slimy, meaning that when you pour the product of a spoon, it will form a long thread. A short texture means that the yoghurt does not stick or form threads when poured of a spoon.

The term fiber used herein refers to a composition of soluble and insoluble fibers selected from the group consisting of short-chain fatty acids, non-starch polysaccharides, beta-glucan and psyllium, cellulose, hemicellulose, resistant starch, resistant dextrins, raffinose, inulin, lignins, chitins, pectins, beta-glucans, fructans, polyuronides, xylose, polydextrose, lactulose, xanthan gum, oligosaccharides.

In one embodiment, the fibers are oligosaccharide and polysaccharide fibers such as maltodextrin, fructooligosaccharides (FOS) and inulin.

In a preferred embodiment, the fibers comprise exopolysaccharides, galactoligosaccharides, fructooligosaccharides, microcrystalline cellulose and/or carboxymethyl cellulose.

The provided methods and compositions may also comprise addition of fruit as an additional component, such as any fruit covered by the definition of a culinary fruit: "Any sweet, edible part of a plant that resembles fruit, even if it does not develop from a floral ovary; also used in a technically imprecise sense for some sweet or sweetish vegetables, some of which may resemble a true fruit or are used in cookery as if they were a fruit, for example rhubarb."

In one embodiment the fruit can be fresh fruit, such as picked fruits only subjected to washing. In another embodiment, the fruit can be dried fruits, such as sundried fruit, machine-dried fruit, dehydrated fruit, fruit dried in heated wind tunnel dryers, freeze-dried fruits, tray (air) dried fruits and/or vacuum microwave dried fruits. Dried fruit may be those having a residual moisture content of 3-18%, such as 5-15%, such as 7-12%, such as 9-10%.

The term "flavour" as used herein refers to a content comprising natural flavours, artificial flavours and/or flavour enhancers. The natural flavours can be sweetening agents such as sugar and/or high intensity sweeteners, fruit and vegetable flavours from concentrates and/or extracts, spices such as cinnamon and vanilla, and dairy flavours from cheese and yoghurt concentrates and/or extracts.

Artificial flavours can be selected from a group consisting of diacetyl, acetylpropionyl, acetoin, isoamyl acetate, benzaldehyde, cinnamaldehyde, ethyl propionate, methyl anthranilate, limonene, ethyl decadienoate, allyl hexanoate, ethyl maltol, ethylvanillin, methyl salicylate, and manzanate.

The term "colour" can be any given food colour or colour additive, such as a natural food colour or artificial food colour. The food colour can be added in any form such as liquids, powders, gels and/or pastes.

The term "colloids" as used herein refers to a mixture in which one substance of microscopically dispersed insoluble particles is suspended throughout another substance. In one embodiment, the colloids are hydrocolloids.

Stabilisers are used to increase the stability and thickness of the food.

The term "emulsifier" used herein refers to any substance that stabilizes an emulsion by increasing its kinetic stability. Examples of emulsifiers include egg yolk, mustard, soy lecithin, sodium phosphates, sodium stearoyl lactylate, DATEM and mono- and diglycerides.

Vitamins are organic molecules, which are essential micronutrients that an organism needs in small quantities for the proper functioning of its metabolism. Vitamins include Vitamin A, Vitamin D3, Vitamin E, Vitamin C, Vitamin B1, Vitamin B2, Vitamin B6, Vitamin B12, Vitamin K1 and Vitamin K2.

The provided compositions may also comprise minerals, such as calcium, iron, magnesium, phosphor, potassium, zinc, copper and/or such as selenium.

### Examples

It is pointed out that only examples where the whey protein concentrate particle fraction has an average size in the range of 15-60 nanometer fall within the scope of the invention as defined by the claims.

### Example 1

In one example, we prepare the liquid yoghurt product as follows, making sure that the protein content and the texture (viscosity) are similar to a yoghurt made with the reference yoghurt base consisting of 9.4% skim milk powder and 6% sugar. Per 100 g of final product (thus **14** g of the powder base composition), 5.5 g Sweet Butter Milk Powder (SBMP) and 1.5 g small-size-particle WPC-80 filter-fraction are mixed and the mixture is shipped to its destination. Whey protein concentrates can have different purities, usually ranging between 29%-89% protein by weight. A WPC containing 80% protein by weight is designated WPC80 and a WPC e.g. containing 60% protein by weight is designated WPC60. In another example the product could also contain a small-size-particle WPC-60 filter-fraction.

Addition of starch, sugar or other ingredients is optional before and after shipment.

In this example, 1 g of pregelatinized starch (Ultra-Sperse HV, Ingredion) and 6 g of sugar (sucrose, Suikerunie) were added. Starter culture can be added either before (only freeze-dried) or after shipment. In this example, the powder without starter culture is reconstituted in 86 g water. After optional pasteurisation (only possible when starter culture is not added in advance), the liquid is inoculated with 0.02 g frozen yoghurt starter culture, for example Yo-mix 401 (DuPont). Fermentation is performed at 42 °C until the pH reaches 4.55. The fermentation follows a curve that could be expected from a normal yoghurt fermentation (figure 4). The product is then cooled to a temperature that does not support further fermentation (<30 °C). The resulting nutritional composition is depicted in Figure 3B and can be compared with a standard yoghurt base made with skim milk powder. The following examples follow a similar process with similar options.

### Example 2

SBMP is replaced with liquid sweet butter milk such that 64.7% of the total weight (of the liquid yoghurt product) is liquid sweet butter milk, hereby lowering the amount of water to be added to the final liquid yoghurt product during production to 26.8%.

The total dry matter and composition are similar to example 1 (Figure 3B), as well as the texture. The mixture containing the liquid sweet butter milk fraction must be pasteurized before shipment and therefore starter culture can only be added after pasteurization.

### Example 3

A powder base composition and liquid yoghurt product are made using the processes as described in the first example, wherein the pre-gelatinized starch is omitted and replaced by 1% water. This gives a reduction in carbohydrate content by 1 g per 100 g finished product (Figure 3B) and a lower viscosity than the reference yoghurt and the yoghurts of examples 1 and 2.

### Example 4

A powder base composition and liquid yoghurt product are made using the processes as described in example 1, wherein the sucrose is omitted. This gives a reduction in carbohydrate and sugar content, whereas all the other parameters are similar to examples 1 and 2 (Figure 3B).

### Example 5

A powder base composition and liquid yoghurt product are made using the processes as described in example 1, wherein the SBMP fraction is reduced by 1.1 g per 100 g finished product (that is 20%). The reduction in protein is compensated by addition of a whey protein ingredient, in this case 0.73 g YQ-5215 (Arla Food Ingredients). This leads to an increase in non-casein nitrogen and a small decrease in total carbohydrate and sugar as well as calcium (Figure 3B). The effect on the product is that the texture is shorter and the viscosity is higher or lower, dependent on the applied whey protein ingredient, compared to the yoghurt of examples 1 and 2.

### Example 6

A powder base composition and liquid yoghurt product are made using the processes as described in the first example, wherein the SBMP fraction is reduced by 1.1 g per 100 g finished product (that is 20%). The reduction in protein is compensated by addition of 0.57 g whey protein ingredient YO-6735 (Arla Food Ingredients). Overall, this leads to an increase in non-casein nitrogen since a whey protein ingredient is used, as well as a small decrease in total carbohydrate, sugar and calcium (Figure 3B). The effect on the product is that the texture is shorter and the viscosity is substantially higher than the yoghurt product of examples 1 and 2.

### Example 7

A powder base composition and liquid yoghurt product are made using the processes as described in example 1, wherein the SBMP fraction is reduced by 1.1 g per 100 g finished product (that is 20%). The reduction in protein is compensated by addition of a plant protein ingredient, in this example pea protein (Bulk Powders). Such replacement of dairy protein with plant protein ingredients typically gives a final product with slightly lower fat, carbohydrate and sugar contents (Figure 3B) and a short but viscous texture. However, this depends on the exact composition of the plant protein ingredient in which normally 50-82% consists of protein and the remaining 50-18% primarily consists of complex carbohydrates and/or fat. Dependent on the colour and flavour of the said plant protein ingredient, the product may obtain the ingredient's colour and capture the ingredient's flavour. Some plant protein ingredients contain dietary fibre, but the content of this in the finished product will be low (<0.1 g / 100 g).

### Example 8

A powder base composition and liquid yoghurt product are made using the processes as described in example 1, wherein the 1 g texture-providing pre-gelatinized starch per 100 g finished product is replaced with gellan gum (Kelcogel YSS (high acyl) at a rate of 0.08 g/100 g, CpKelco). Alternatively, other texturizers could be used. The result, compared to example 1, is a reduction in carbohydrate content (Figure 3B), whereas all the other parameters are similar to examples 1 and 2.

### Example 9

A powder base composition and liquid yoghurt product are made using the processes as described in example 1, wherein the 1 g texture-providing pre-gelatinized starch per 100 g finished product is replaced for an equal amount of corn flour (Molino favero). The result on the product composition due to corn flour is as follows: compared to examples 1 and 2 there is a slightly higher amount of non-casein protein, a slightly lower amount of carbohydrate, and inclusion of dietary fiber in the order of 0.1-0.2 g per 100 g finished product (Figure 3B).

If native starch is used instead of corn flour, the composition would be in between that of examples 1 and 2. As the product will contain less total starch (in the case of flour) and less functional starch (in both the cases of flour and native starch), the product will have lower viscosity than the standard yoghurt base and examples 1 and 2, but more than example 3. Some flours may also influence the colour and flavour of the finished product.

### Example 10

A powder base composition and liquid yoghurt product are made using the processes as described in example 1, wherein the 6 g sucrose is replaced by 3.53 g fructose (Figure 3B), allowing the yoghurt to reach the same sweetness level with less sugar. In the given example with fructose, the contents of sugar and thereby total carbohydrate are 2.47 g per 100 g product lower (i.e. 28% sugar reduction) than in examples 1 and 2, whereas the glycemic index is reduced 2.44-fold without any further change in any of the other product parameters compared to examples 1 and 2.

### Example 11

A powder base composition and liquid yoghurt product are made using the processes as described in example 1, wherein the 6 g sucrose is replaced for 5 g galactooligosaccharides (GOS fiber). The effect on the composition, compared to examples 1 and 2, is that there is 1 g per 100 g product less carbohydrate content and a substantial (6 g) reduction of sugars, whereas 5 g of dietary fibre is introduced (Figure 3B). There is no effect on the texture (but other fiber ingredients may increase viscosity) or flavour by GOS, except that the sweetness is lower than that of examples 1 and 2, because the Relative Sweetness of GOS fiber is only one third of that of sucrose.

### Example 12

A powder base composition and liquid yoghurt product are made using the processes as described in example 3, where to 1.85 g butter containing 81% dairy fat (that is 1.5% fat) is added per 100 g final product at the expense of 1.85% water. Because the butter is a (semi-)liquid, it cannot be part of the powder base composition and, hence, needs to be added at the point of reconstitution. Applying butter in the production process makes the total fat content 1.97% whereas all other compositional parameters are similar to example 3, that is a reduction in carbohydrate content by 1 g per 100 g product compared to examples 1 and 2 (Figure 3B). The viscosity will be similar to or slightly higher than the reference sweetened skim yoghurt and examples 1 and 2, but it will be higher than example 3 and be creamier than all the four mentioned examples.

### Example 13

A powder base composition and liquid yoghurt product are made using the processes as described in example 3, where to 1.5 g vegetable fat is added in the form of sunflower oil per 100 g final product at the expense of 1.5% water. Because the vegetable fat is a (semi-)liquid, it cannot be part of the powder base composition and, hence, needs to be added at the point of reconstitution. Applying vegetable fat in the production process makes the total fat content 1.97% whereas all other compositional parameters are similar to example 3, which is a reduction in carbohydrate content by 1 g per 100 g product compared to examples 1 and 2 (Figure 3B). The viscosity will be lower or higher, dependent on the nature of the vegetable fat, than the reference sweetened skim yoghurt and examples 1 and 2, but it will be higher than example 3 and be creamier than all the four mentioned examples. Some vegetable fats may influence the colour and flavour of the finished product.

It must be noted that examples 3-13 are described as following the processes described for example 1, resulting in a powder base composition that can later be reconstituted. These examples are also possible following the processes described for example 2, i.e. the application of the ingredients to constitute a liquid base composition containing liquid butter milk.

## Claims

1. A yoghurt base composition comprising butter milk and a Whey Protein Concentrate (WPC)-particle fraction having an average size in the range of 15-60 nanometer.

2. The yoghurt base composition according to claim 1, further comprising sweetening agents, starch, protein, lipids, emulsifiers, stabilisers, hydrocolloids, flavours, flavour enhancers, colours, starter cultures, fibre, vitamins and/or minerals.

3. The yoghurt base composition according to any of the preceding claims, wherein said yoghurt base composition is a powder base composition.

4. The yoghurt base composition according to claim 3, further comprising a lyophilized yoghurt fermentation starter culture containing *Streptococcus thermophilus* and *Lactobacillus delbrueckii* subsp. *bulgaricus* and optionally a lyophillized adjunct culture from the genera *Lactobacillus, Streptococcus, Leuconostoc, Lactococcus* or *Bifidobacterium.*

5. The yoghurt base composition according to any of claims 1, 2, and 4, wherein said yoghurt base composition is a liquid base composition.

6. A method of producing a yoghurt base composition, said method comprising combining butter milk and the Whey Protein Concentrate (WPC)-particle fraction, wherein said WPC particles have an average size in the range of 15-60nm.

7. The method of producing a yoghurt base composition according to claim 6, said method comprising the steps of
a. obtaining a liquid whey protein concentrate from a whey protein composition,
b. separating and isolating a dry whey protein concentrate from said liquid whey protein concentrate, thereby obtaining a WPC-particle fraction,
c. providing butter milk, and
d. mixing said WPC-particle fraction with said butter milk.

8. The method of producing a yoghurt base composition according to any of claims 6 and 7, said method further comprising adding sweetening agents, starch, protein, lipids, emulsifiers, stabilisers, hydrocolloids, flavours, flavour enhancers, colours, starter cultures, fibre, vitamins and/or minerals to said yoghurt base composition.

9. A method of producing a liquid yoghurt product or a liquid yoghurt-like product, said method comprising mixing a yoghurt base composition as defined in any of the preceding claims 1 to 5 with a liquid or a further liquid, such as water, milk, butter milk, milk permeate, juice, milk and/or juice concentrates.

10. The method according to claim 9, wherein said liquid yoghurt or yoghurt-like product is allowed to ferment by heating the composition to 30-45 °C.

11. The method according to claim 10, wherein said liquid yoghurt or yoghurt-like product is allowed to ferment until a pH of 4.2-4.7 is reached, where after fermentation is terminated.

12. The method according to any of the preceding claim 9 to 11, wherein a yoghurt fermentation starter culture containing *Streptococcus thermophilus* and *Lactobacillus delbrueckii* subsp. *bulgaricus* and optionally an adjunct culture from the genera *Lactobacillus, Streptococcus, Leuconostoc, Lactococcus* or *Bifidobacterium* are added to the liquid yoghurt or yoghurt-like product.

## Patentansprüche

1. Joghurtgrundzusammensetzung, umfassend Buttermilch und einen Anteil von Partikeln eines Molkeproteinkonzentrats (WPC) mit einer mittleren Größe im Bereich von 15-60 Nanometern.

2. Joghurtgrundzusammensetzung nach Anspruch 1, weiter umfassend Süßungsmittel, Stärke, Protein, Lipide, Emulgatoren, Stabilisatoren, Hydrokolloide, Aromen, Geschmacksverstärker, Farbstoffe, Ausgangskulturen, Faser, Vitamine und/oder Mineralien.

3. Joghurtgrundzusammensetzung nach einem der vorstehenden Ansprüche, wobei die Joghurtgrundzusammensetzung eine pulverbasierte Zusammensetzung ist.

4. Joghurtgrundzusammensetzung nach Anspruch 3, weiter umfassend eine lyophilisierte Ausgangskultur für die Joghurtfermentation, enthaltend *Streptococcus thermophilus* und *Lactobacillus delbrueckii* subsp. *bulgaricus* und optional eine lyophilisierte Ergänzungskultur aus den Gattungen *Lactobacillus, Streptococcus, Leuconostoc, Lactococcus* oder *Bifidobacterium.*

5. Joghurtgrundzusammensetzung nach einem der Ansprüche 1, 2 und 4, wobei die Joghurtgrundzusammensetzung eine flüssigkeitsbasierte Zusammensetzung ist.

6. Verfahren zum Herstellen einer Joghurtgrundzusammensetzung, wobei das Verfahren ein Kombinieren von Buttermilch und dem Anteil von Partikeln eines Molkeproteinkonzentrats (WPC) umfasst, wobei die WPC-Partikel eine mittlere Größe im Bereich von 15-60 nm aufweisen.

7. Verfahren zum Herstellen einer Joghurtgrundzusammensetzung nach Anspruch 6, wobei das Verfahren die folgenden Schritte umfasst:
a. Erhalten eines flüssigen Molkeproteinkonzentrats aus einer Molkeproteinzusammensetzung,
b. Trennen und Isolieren eines trockenen Molkeproteinkonzentrats von/aus dem flüssigen Molkeproteinkonzentrat, wodurch ein Anteil von WPC-Partikeln erhalten wird,
c. Bereitstellen von Buttermilch, und
d. Mischen des Anteils von WPC-Partikeln mit der Buttermilch.

8. Verfahren zum Herstellen einer Joghurtgrundzusammensetzung nach einem der Ansprüche 6 und 7, wobei das Verfahren weiter ein Hinzufügen von Süßungsmitteln, Stärke, Protein, Lipiden, Emulgatoren, Stabilisatoren, Hydrokolloiden, Aromen, Geschmacksverstärkern, Farbstoffen, Ausgangskulturen, Faser, Vitaminen und/oder Mineralien zu der Joghurtgrundzusammensetzung umfasst.

9. Verfahren zum Herstellen eines flüssigen Joghurtprodukts oder eines flüssigen joghurtähnlichen Produkts, wobei das Verfahren ein Mischen einer Joghurtgrundzusammensetzung nach einem der vorstehenden Ansprüche 1 bis 5 mit einer Flüssigkeit oder einer weiteren Flüssigkeit umfasst, beispielsweise Wasser, Milch, Buttermilch, Milchpermeat, Saft, Milch- und/oder Saftkonzentrate.

10. Verfahren nach Anspruch 9, wobei ein Fermentieren des flüssigen Joghurts oder r joghurtähnlichen Produkts durch Erwärmen der Zusammensetzung auf 30-45 °C gestattet ist.

11. Verfahren nach Anspruch 10, wobei ein Fermentieren des flüssigen Joghurts oder joghurtähnlichen Produkts bis zum Erreichen eines pH-Werts von 4,2-4,7 gestattet ist, wonach die Fermentation beendet wird.

12. Verfahren nach einem der vorstehenden Ansprüche 9 bis 11, wobei eine Ausgangskultur für die Joghurtfermentation, enthaltend *Streptococcus thermophilus* und *Lactobacillus delbrueckii* subsp. *bulgaricus* und optional eine Ergänzungskultur aus den Gattungen *Lactobacillus, Streptococcus, Leuconostoc, Lactococcus* oder *Bifidobacterium* zu dem flüssigen Joghurt oder joghurtähnlichen Produkt hinzugefügt werden.

## Revendications

1. Composition de base de yaourt comprenant du babeurre et une fraction de particules de concentré de protéines de lactosérum (WPC) ayant une taille moyenne dans la plage de 15 à 60 nanomètres.

2. Composition de base de yaourt selon la revendication 1, comprenant en outre des agents édulcorants, de l'amidon, des protéines, des lipides, des émulsifiants, des stabilisants, des hydrocolloïdes, des arômes, des exhausteurs de goût, des colorants, des cultures d'ensemencement, des fibres, des vitamines et/ou des minéraux.

3. Composition de base de yaourt selon l'une quelconque des revendications précédentes, ladite composition de base de yaourt étant une composition de base en poudre.

4. Composition de base de yaourt selon la revendication 3, comprenant en outre une culture d'ensemencement de fermentation de yaourt lyophilisée contenant *Streptococcus thermophilus* et *Lactobacillus delbrueckii* subsp. *bulgaricus* et en option une culture adjuvante lyophilisée appartenant aux genres *Lactobacillus, Streptococcus, Leuconostoc, Lactococcus* ou *Bifidobacterium.*

5. Composition de base de yaourt selon l'une quelconque des revendications 1, 2, et 4, ladite composition de base de yaourt étant une composition de base liquide.

6. Procédé de production d'une composition de base de yaourt, ledit procédé comprenant l'association de babeurre et de la fraction de particules de concentré de protéines de lactosérum (WPC), lesdites particules de WPC ayant une taille moyenne dans la plage de 15 à 60 nm.

7. Procédé de production d'une composition de base de yaourt selon la revendication 6, ledit procédé comprenant les étapes consistant à :
a. obtenir un concentré liquide de protéines de lactosérum à partir d'une composition de protéines de lactosérum,
b. séparer et isoler un concentré sec de protéines de lactosérum à partir dudit concentré liquide de protéines de lactosérum, de manière à obtenir une fraction de particules de WPC,
c. mettre à disposition du babeurre, et
d. mélanger ladite fraction de particules de WPC avec ledit babeurre.

8. Procédé de production d'une composition de base de yaourt selon l'une quelconque des revendications 6 et 7, ledit procédé comprenant en outre ajouter des agents édulcorants, de l'amidon, des protéines, des lipides, des émulsifiants, des stabilisants, des hydrocolloïdes, des arômes, des exhausteurs de goût, des colorants, des cultures d'ensemencement, des fibres, des vitamines et/ou des minéraux à ladite composition de base de yaourt.

9. Procédé de production d'un produit liquide de type yaourt ou d'un produit liquide semblable au yaourt, ledit procédé comprenant l'étape consistant à mélanger une composition de base de yaourt telle que définie dans l'une quelconque des revendications 1 à 5 précédentes avec un liquide ou un liquide supplémentaire, tel que l'eau, le lait, le babeurre, le perméat de lait, un jus, des concentrés de lait et/ou de jus.

10. Procédé selon la revendication 9, dans lequel ledit produit liquide de type yaourt ou semblable au yaourt est laissé fermenter par chauffage de la composition à 30-45 °C.

11. Procédé selon la revendication 10, dans lequel ledit produit liquide de type yaourt ou semblable au yaourt est laissé fermenter jusqu'à ce que soit atteint un pH de 4,2-4,7, à la suite de quoi la fermentation est terminée.

12. Procédé selon l'une quelconque des revendications 9 à 11 précédentes, dans lequel une culture d'ensemencement de fermentation de yaourt, contenant *Streptococcus thermophilus* et *Lactobacillus delbrueckii* subsp. *bulgaricus* et en option une culture adjuvante appartenant aux genres *Lactobacillus, Streptococcus, Leuconostoc, Lactococcus* ou *Bifidobacterium,* sont ajoutées au produit liquide de type yaourt ou semblable au yaourt.
